# EUROPÄISCHE PATENTANMELDUNG

(11) **EP 1 555 178 A1**
(43) Veröffentlichungstag der Anmeldung: **20.07.2005**
(21) Anmeldenummer: 04000915.1
(22) Anmeldetag: 16.01.2004
(51) Int. Cl.: B60S 13/00, B60D 1/00, B62D 53/00

(54) **Stützvorrichtung**

(71) Anmelder: ACR Software Services GmbH, 71332 Waiblingen (DE)
(72) Erfinder: Nerad, Dalibor, Dipl.-Ing., 70736 Fellbach (DE); Köhler, Matthias, Dipl.-Ing., 74360 Auenstein (DE)
(74) Vertreter: Bregenzer, Michael

(57) **Zusammenfassung**

Die Erfindung betrifft eine Stützvorrichtung (10) zum Stützen eines Fahrzeug-Anhängers (11), insbesondere eines Wohnanhängers, mit einer Radanordnung (12), auf der der Anhänger (11) zumindest teilweise auflastet. An der Stützvorrichtung (10) ist eine Kupplungseinrichtung (18) zum Ankuppeln einer Anhänger-Kupplungseinrichtung des Anhängers (11) vorhanden. Sie enthält ferner einen Antrieb (31) zum Antreiben der Radanordnung (12).

## Beschreibung

Die Erfindung betrifft eine Stützvorrichtung zum Stützen eines Fahrzeug-Anhängers, insbesondere eines Wohnanhängers, mit einer Radanordnung, auf der der Anhänger zumindest teilweise auflastet.

Eine derartige Stützvorrichtung wird beispielsweise durch ein Stützrad gebildet, das an einer Deichsel des Anhängers angeordnet ist. In Fahrstellung des Anhängers ist das Stützrad vom Untergrund weg verstellt, beispielsweise durch Wegschwenken, Hochkurbeln oder dergleichen. Zum Abstellen des Anhängers, aber auch zu Rangierzwecken, wird das Stützrad nach unten verstellt, beispielsweise nach unten verschwenkt, sodass die Deichsel des Anhängers durch das Stützrad gestützt ist. In dieser Stützstellung kann der Anhänger beispielsweise von Hand rangiert werden. Dies ist allerdings unbequem und anstrengend. Auf abschüssigem Gelände ist ein derartiges Rangieren von Hand sogar gefährlich, da der oder die rangierende(n) Person(en) möglicherweise die zum Halten des Anhängers notwendigen Kräfte nicht aufbringen können und vom Anhänger überrollt werden.

Andererseits ist das Rangieren des Anhängers mit einem Zugfahrzeug, beispielsweise mit einem Personenkraftwagen, aufgrund beengter Platzverhältnisse oft nicht möglich. Zudem ist ein erhebliches Geschick des Fahrers des Rangier-Zugfahrzeuges gefordert.

Es ist daher die Aufgabe der vorliegenden Erfindung, eine Stützvorrichtung der eingangs genannten Art derart weiterzubilden, dass sie ein bequemes Rangieren ermöglicht.

Zur Lösung der Aufgabe weist die Stützvorrichtung der eingangs genannten Art eine Kupplungseinrichtung zum Ankuppeln einer Anhänger-Kupplungseinrichtung des Anhängers auf und enthält einen Antrieb zum Antreiben der Radanordnung.

Die beim Rangieren erforderlichen Antriebskräfte stellt der Antrieb, beispielsweise ein elektrischer oder hydraulischer Antrieb, bereit, sodass ein Nutzer der Stützvorrichtung lediglich Lenkkräfte auf die Stützvorrichtung bzw. den Anhänger ausüben muss. Somit wird das Rangieren erheblich erleichtert. Mit Hilfe der Kupplungseinrichtung kann die Stützvorrichtung an den Anhänger angekuppelt und später wieder abgekuppelt werden. Somit ist die Stützvorrichtung auch für unterschiedliche Anhänger verwendbar, wobei allerdings auf Seiten der Anhänger mit der Kupplungseinrichtung der Stützvorrichtung korrespondierende Anhänger-Kupplungseinrichtungen erforderlich sind.

Besonders bevorzugt ist eine niedrige Bauhöhe der Stützvorrichtung, die dann eine Art Unterflurfahrzeug oder Niederflurfahrzeug bildet. Die Stützvorrichtung weist beispielsweise einen Rahmen auf, dessen Höhe im Wesentlichen der Höhe der Räder der Radanordnung entspricht.

Vorteilhafte Ausgestaltungen der Erfindung finden sich in den abhängigen Ansprüchen und der Beschreibung.

Zweckmäßigerweise weist die erfindungsgemäße Stützvorrichtung eine Lenkeinrichtung auf, mit der sie lenkbar ist. Die Lenkeinrichtung ist vorzugsweise von einem Nutzer ergreifbar, der sich abseits der Stützvorrichtung befindet. Die Lenkeinrichtung enthält beispielsweise ein stangenartiges Lenkglied. Die Stellung des stangenartigen Lenkgliedes korrespondiert beispielsweise mit der Stellung gelenkter Räder der Stützvorrichtung. Das stangenartige Lenkglied steht in Abhängigkeit von der jeweiligen Lenkstellung beispielsweise nach vorn oder seitlich vor die Stützvorrichtung vor. Es versteht sich, dass auch andere Lenkhandhaben möglich sind, z.B. ein Lenkrad mit einem zweckmäßigerweise großen Durchmesser, so dass der Außenumfang des Lenkrades seitlich vor die erfindungsgemäße Stützvorrichtung vorsteht. An der Lenkeinrichtung sind zweckmäßigerweise Bedienmittel zur Bedienung des Antriebs vorhanden, beispielsweise Schalter zum Ein- und Ausschalten des Antriebs, zur Vorgabe der Fahrtrichtung und/oder Fahrgeschwindigkeit oder dergleichen. Die Lenkeinrichtung kann einen Servomotor zur Lenkunterstützung aufweisen.

Besonders bevorzugt ist eine zweiachsige Bauweise. Beispielsweise sind an einer Vorderachse ein oder zwei Vorderräder angeordnet und an einer Hinterachse zwei Hinterräder. Die Vorderachse ist vorteilhafterweise lenkbar. Zur Verbesserung der Lenkbarkeit trägt bei, wenn die Spurweite der Vorderräder kleiner ist als die Spurweite der Hinterräder.

Die Kupplungseinrichtung ist vorteilhafterweise in Längserstreckungsrichtung der Stützvorrichtung zwischen der Vorder- und der Hinterachse oder im Wesentlichen nahe der Hinterachse angeordnet. Besonders bevorzugt ist eine Anordnung zwischen den beiden Achsen. Jedenfalls bewirken diese Maßnahmen, dass die Stützvorrichtung auch bei auflastendem Anhänger nicht kippt.

Zweckmäßigerweise ist die Kupplungseinrichtung höhenverstellbar, beispielsweise manuell oder motorisch. Die Höhenverstellbarkeit verbessert die Bedienbarkeit der Stützvorrichtung. Beispielsweise wird die Kupplungseinrichtung zunächst in eine untere Stellung verstellt, bevor die Stützvorrichtung so positioniert wird, dass sich die Kupplungseinrichtungen von Anhänger und Stützvorrichtung gegenüberstehen. Sodann wird die Kupplungseinrichtung des Anhängers nach oben verstellt, sodass sie mit der Anhänger-Kupplungseinrichtung in Eingriff gelangt.

Zweckmäßigerweise sind bei der Stützvorrichtung eine oder mehrere Auflageflächen zur Anbringung eines oder mehrerer Gewichte vorhanden. Durch die Gewichte werden die Antriebseigenschaften der Stützvorrichtung verbessert.

Nachfolgend wird ein Ausführungsbeispiel der Erfindung anhand der Zeichnung näher erläutert. Es zeigen:
- Figur 1: eine perspektivische Ansicht einer erfindungsgemäßen Stützvorrichtung mit einem schematisch dargestellten angekuppelten Fahrzeug-Anhänger,
- Figur 2: die Stützvorrichtung gemäß Fig. 1 von oben, jedoch ohne angekuppelten Anhänger,
- Figur 3: eine Seitenansicht der Stützvorrichtung gemäß Fig. 2 und
- Figur 4: eine hintere Ansicht der Stützvorrichtung gemäß Figuren 2 und 3.

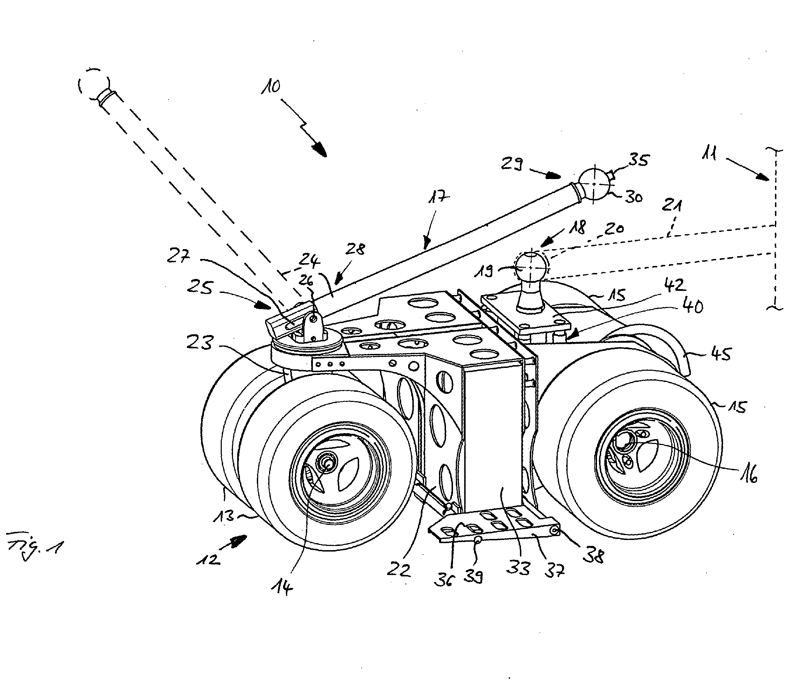

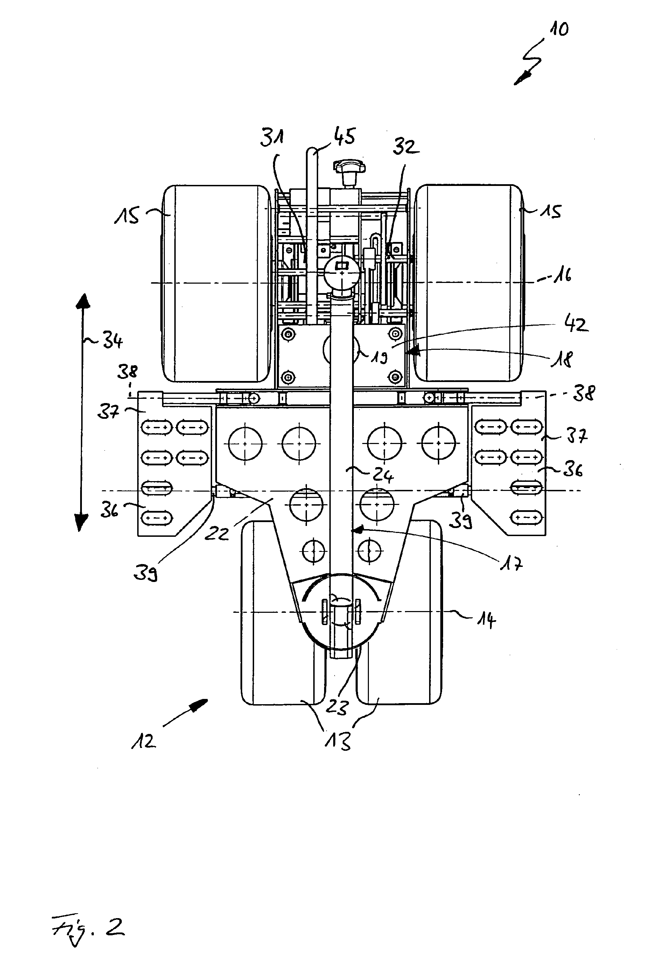

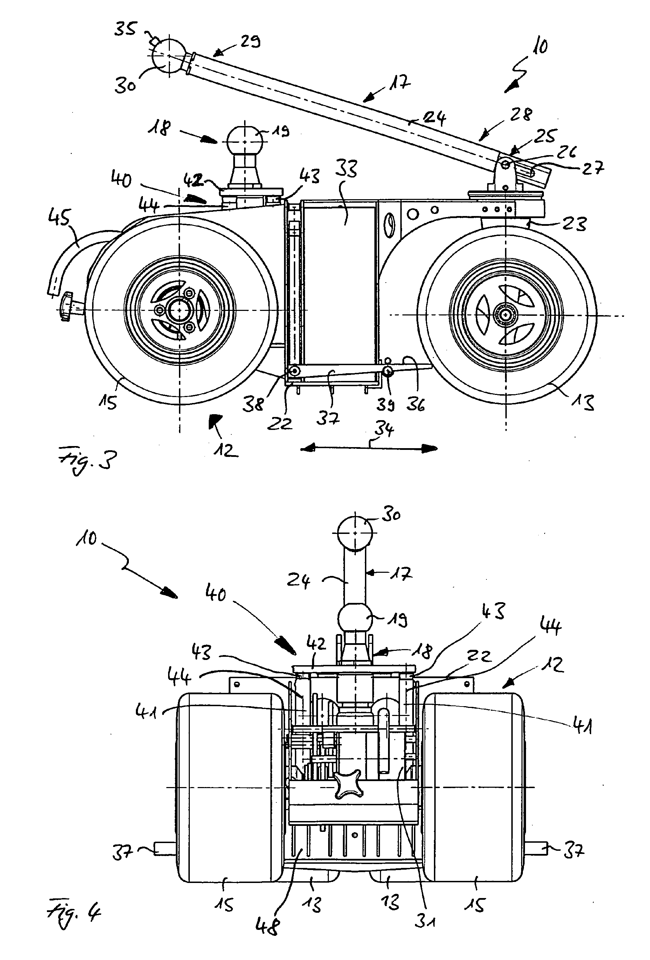

Eine insgesamt mit 10 bezeichnete Stützvorrichtung dient zum Stützen eines schematisch angedeuteten Fahrzeug-Anhängers 11, beispielsweise eines Wohnanhängers oder Lastanhängers. Der Anhänger 11 ist vorliegend insbesondere für einen Personenkraftwagen vorgesehen. Prinzipiell wäre es aber auch möglich, eine erfindungsgemäße Stützvorrichtung zum Stützen eines für Lastfahrzeuge vorgesehenen Anhängers auszugestalten. Die Stützvorrichtung 10 weist eine Radanordnung 12 mit lenkbaren Vorderrädern 13 an einer Vorderachse 14 sowie vorliegend nicht lenkbare Hinterräder 15 an einer Hinterachse 16 auf. Die Räder 13, 15 sind beispielsweise Vollgummiräder, mit Luft befüllte Räder oder dergleichen.

Die Vorderachse 14 ist vorliegend mittels einer Lenkeinrichtung 17 lenkbar. Die Achsen 14, 16 sind zweckmäßigerweise durchgehende Achsen, wobei aber auch eine Einzelradaufhängung möglich ist. Die Hinterräder 15 sind z.B. starr oder gefedert an einem Rahmen 22 der Stützvorrichtung 10 gelagert. Die Vorderräder 13 sind an einem bezüglich des Rahmens 22 drehbaren Drehgestell 23 angeordnet. Die Spurweite der Vorderräder 13 ist kleiner als die Spurweite der Hinterräder 15. Das Drehgestell 23 ist vorteilhafterweise um 360° drehbar.

Der Anhänger 11 kann an eine Kupplungseinrichtung 18 der Stützvorrichtung 10 angekuppelt werden. Die Kupplungseinrichtung 18 enthält beispielsweise einen Kupplungskopf 19 in der Art eines Kugelkopfs, der nach oben orientiert ist. Die Kupplungseinrichtung 18 steht vorliegend nach oben vor den Rahmen 22 vor. Auf dem Kupplungskopf 19 ist eine Anhänger-Kupplungseinrichtung 20 des Anhängers 11 auflegbar, sodass die Kupplungseinrichtung 18 und somit die Stützvorrichtung 10 den Anhänger 11 stützt. Die Anhänger-Kupplungseinrichtung 20 befindet sich beispielsweise an einer Deichsel 21, die nach vorn vor den Anhänger 11 vorsteht. Die Anhänger-Kupplungseinrichtung 20 dient üblicherweise zum Ankuppeln des Anhängers 11 an ein Zugfahrzeug, insbesondere an einen Personenkraftwagen. Vorliegend ist sie jedoch an die Stützvorrichtung 10 angekuppelt. Es versteht sich, dass die Kupplungseinrichtung 18 auch andersartig ausgestaltet sein kann, beispielsweise zum Ankuppeln von Lastkraftwagenanhängern oder dergleichen, wobei die Kupplungseinrichtung 18 zum Beispiel eine Art Kupplungsmaul aufweisen kann.

Die Kupplungseinrichtung 18 befindet sich bei der Stützvorrichtung 10 in einer optimalen Schwerpunktlage, nämlich in Längserstreckungsrichtung 34 der Stützvorrichtung 10 zwischen den beiden Achsen 14 und 16. Zudem belastet der auf der Stützvorrichtung 10 auflastende Anhänger 11 vorzugsweise die Hinterräder 15. Dies wird dadurch bewirkt, dass sich die Kupplungseinrichtung 18 nahe der Hinterachse 16 befindet.

Zum Lenken der Stützvorrichtung 10 beeinflusst die Lenkeinrichtung 17 die Drehposition des Drehgestells 23. Die Lenkeinrichtung 17 weist eine Lenkstange 24 auf. Die Lenkstange 24 wirkt auf das Drehgestell 23. Die Lenkstange 24 kann von einem abseits der Stützvorrichtung 10 befindlichen Nutzer ergriffen werden. Die Lenkstange 24 ist vertikal schwenkbar an einem Schwenklager 25 des Drehgestells 23 angelenkt. Die Lenkstange 24 kann beispielsweise in eine Ruheposition geschwenkt bzw. geklappt werden, bei der sie auf dem Rahmen 22 aufliegt. Im nach oben geschwenkten Zustand, beispielsweise in der gestrichelt dargestellten Stellung, dient die Lenkstange 24 zum Lenken der Stützvorrichtung 10, wobei insbesondere horizontale Lenkkräfte auf das Drehgestell 23 übertragbar sind.

Horizontal orientierte Lagerbolzen 26 des Schwenklagers 25 greifen in seitliche Aufnahmen 27 am unteren Ende 28 der Lenkeinrichtung 17 ein. Die Aufnahmen 27 sind beispielsweise in Längsrichtung der Lenkstange 24 orientierte Längsschlitze. Es ist auch möglich, anstelle der Lagerbolzen 26 eine Schwenkachse vorzusehen, die eine entsprechende Durchgangsöffnung, beispielsweise ein wie die Aufnahmen 27 orientiertes Langloch, am unteren Ende der Lenkstange 24 durchgreift.

Am oberen Ende 29 der Lenkstange 24 befindet sich eine Handhabe 30, beispielsweise in Gestalt eines Kugelkopfes, die von einem Nutzer der Stützvorrichtung 10 zum Lenken der Stützvorrichtung 10 ergriffen werden kann.

Ein Antrieb 31, beispielsweise ein Elektroantrieb oder ein Hydraulikantrieb, treibt über ein Getriebe 32 die Hinterräder 15 an. Das Getriebe 32 ist vorzugsweise so ausgelegt, dass ein verhältnismäßig hohes Drehmoment auf die Hinterräder 15 wirkt. Eine Batterieanordnung 33 versorgt den Antrieb 31 mit elektrischer Energie. Die Batterieanordnung 33 ist in Längserstreckungsrichtung 34 zwischen der Vorderachse 14 und der Hinterachse 16 angeordnet. Die Batterieanordnung 33 weist vorliegend eine tiefe Schwerpunktlage auf. Die Batterieanordnung 33 befindet sich beispielsweise vertikal etwa in Höhe der Räder 13, 15.

Der Antrieb 31 ist durch Bedienmittel 35 steuerbar. Die Bedienmittel 35 befinden sich an der Lenkeinrichtung 17, zweckmäßigerweise im oberen Endbereich 29 der Lenkstange 24. Die Bedienmittel 35 enthalten beispielsweise Tasten, Bedienhebel oder dergleichen, mit denen der Antrieb 31 ein- und ausschaltbar ist, die Drehrichtung und/oder die Drehgeschwindigkeit des Antriebs 31 einstellbar ist.

Die Stützvorrichtung 10 baut außerordentlich kompakt. Beispielsweise ist sie etwa 30 bis 40 cm hoch. Der Abstand zwischen den Achsen 14, 16 beträgt zweckmäßigerweise etwa 35 bis 60 cm, wobei eine Länge von 40 bis 50 cm besonders bevorzugt ist. Dementsprechend kann die Stützvorrichtung 10 leicht verstaut und mitgenommen werden, beispielsweise in einem Stauraum des Anhängers 11.

Der Rahmen 22 steht nach oben nur unwesentlich vor die Räder 13, 15, die beim Ausführungsbeispiel unterschiedliche Durchmesser aufweisen, vor. Die Höhe des Rahmens 22 entspricht im Wesentlichen dem Durchmesser der Räder 13, 15. Der Rahmen 22 besteht beispielsweise aus Metall und/oder Kunststoff. Beim Ausführungsbeispiel weist der Rahmen 22 aus Gründen der Gewichtsersparnis zudem Aussparungen auf. Zweckmäßigerweise ist der Rahmen 22 aus Aluminium gefertigt.

Am Rahmen 22 befinden sich Auflageflächen 36, auf die Belastungsgewichte (nicht dargestellt) aufgelegt werden können, um die Belastung der angetriebenen Hinterräder 15 zu erhöhen und somit deren Antriebseigenschaften zu verbessern. Auflageflächen 36 befinden sich beim Ausführungsbeispiel seitlich am Rahmen 22 und werden beispielsweise durch Klappelemente 37 gebildet, die trittbrettartig seitlich vor den Rahmen 22 vorstehen. Die Klappelemente 37 (es können auch starre Auflageflächen vorgesehen sein) sind um Schwenkachsen 38 zwischen einer nach oben geschwenkten Nicht-Gebrauchsstellung und einer nach unten geschwenkten Gebrauchsstellung verschwenkbar. In der Gebrauchsstellung liegen die Klappelemente 37 auf Stützstreben 39 auf, die wie die Schwenkachsen 38 seitlich vor den Rahmen 22 vorstehen.

Die Kupplungseinrichtung 18 steht beim Ausführungsbeispiel nach oben vor den Rahmen 22 vor. Sie ist mittels einer Verstelleinrichtung 40 höhenverstellbar. Die Verstelleinrichtung 40 enthält beispielsweise elektrische und/oder hydraulische und/oder pneumatische Linearantriebe, Spindelantriebe oder dergleichen. Es versteht sich, dass auch eine manuell bedienbare Verstelleinrichtung für die Kupplungseinrichtung 18 prinzipiell möglich ist, die beispielsweise eine Handkurbel oder dergleichen enthält. Die Verstelleinrichtung 40 enthält vertikal orientierte, z.B. hydraulische Kolbenantriebe 41, an deren oberen Enden eine Tragplatte 42 angeordnet ist, die den Kupplungskopf 19 trägt. Die Kolbenantriebe 41 enthalten Kolben 43, die nach oben vor Antriebsgehäuse 44 der Kolbenantriebe 41 vorstehen. In Abhängigkeit von einer Druckbeaufschlagung der Kolbenantriebe 41 sind die Kolben 43 nach oben bzw. unten bewegbar, sodass die oben auf den Kolben 43 sitzende Tragplatte 42 und somit der Kupplungskopf 19 nach oben oder unten bewegbar sind.

Die Stützvorrichtung 10 kann verschiedenartige Abdeckungen aufweisen, die beispielsweise den hinteren und/oder den vorderen Teil der Stützvorrichtung 10 überdecken. Aus Gründen der Sicherheit kann auch eine Abdeckung der Räder vorhanden sein, beispielsweise der angetriebenen Hinterräder 15. Zur Anbringung einer derartigen Abdeckung weist die Stützvorrichtung 20 eine oder mehrere Stützstellen auf, die beispielsweise durch den Rahmen 22 gebildet werden. Zusätzlich ist bei der Stützvorrichtung 10 ein nach hinten vorstehender Bügel 45 zum Stützen einer in der Figur nicht dargestellten Abdeckung der Stützvorrichtung 10 vorhanden. Diese Abdeckung überdeckt zweckmäßigerweise den Antrieb 31 und das Getriebe 33 sowie vorteilhafterweise auch die angetriebenen Hinterräder 15.

Eine Bodenabdeckung 46 an der Unterseite der Stützvorrichtung 10 schützt den Antrieb 31 bzw. das Getriebe 32 vor Beschädigungen von unten.

Die Stützvorrichtung 10 ist nicht für den Betrieb durch einen Fahrer gedacht. Vielmehr steht ein Bediener der Stützvorrichtung 10 neben dieser. Dementsprechend ist auch kein Sitz für einen Fahrer vorhanden, sodass man die Stützvorrichtung 10 auch als eine sitzlose oder fahrerlose Stützvorrichtung oder Rangiervorrichtung bezeichnen könnte.

Es versteht sich, dass verschiedenartige Varianten der Stützvorrichtung 10 ohne weiteres möglich sind. Beispielsweise könnte das Getriebe 32 mehrgängig sein.

Ferner könnte ein Kettenantrieb vorhanden sein. Bei einem derartigen Kettenantrieb ist eine Kombination lenkbarer Räder mit durch Ketten angetriebenen Rädern bevorzugt, wobei z.B. eine dreiachsige Anordnung entsteht.

## Patentansprüche

1. Stützvorrichtung zum Stützen eines Fahrzeug-Anhängers (11), insbesondere eines Wohnanhängers, mit einer Radanordnung (12), auf der der Anhänger (11) zumindest teilweise auflastet, **dadurch gekennzeichnet, dass** sie eine Kupplungseinrichtung (18) zum Ankuppeln einer Anhänger-Kupplungseinrichtung (20) des Anhängers (11) aufweist, und dass sie einen Antrieb (31) zum Antreiben der Radanordnung (12) enthält.

2. Stützvorrichtung nach Anspruch 1, **dadurch gekennzeichnet, dass** sie eine Lenkeinrichtung (17) aufweist, mit der die Stützvorrichtung (10) lenkbar ist.

3. Stützvorrichtung nach Anspruch 2, **dadurch gekennzeichnet, dass** die Lenkeinrichtung (17) von einem Nutzer ergreifbar ist, der sich abseits der Stützvorrichtung (10) befindet.

4. Stützvorrichtung nach Anspruch 2 oder 3, **dadurch gekennzeichnet, dass** die Lenkeinrichtung (17) ein stangenartiges Lenkglied (24) aufweist.

5. Stützvorrichtung nach einem der Ansprüche 2 bis 4, **dadurch gekennzeichnet, dass** an der Lenkeinrichtung (17), insbesondere am oberen Ende des stangenartigen Lenkglieds (24), Bedienmittel (35) zur Bedienung des Antriebs (31) vorhanden sind.

6. Stützvorrichtung nach einem der vorhergehenden Ansprüche, **dadurch gekennzeichnet, dass** die Radanordnung (12) mindestens ein Vorderrad (13) einer Vorderachse (14) und mindestens zwei Hinterräder (15) einer Hinterachse (16) oder umgekehrt aufweist.

7. Stützvorrichtung nach Anspruch 6, **dadurch gekennzeichnet, dass** die Vorderachse (14) lenkbar ist.

8. Stützvorrichtung nach einem der vorhergehenden Ansprüche, **dadurch gekennzeichnet, dass** die Kupplungseinrichtung (18) in Längserstreckungsrichtung (34) der Stützvorrichtung (10) zwischen der Vorderachse (14) und der Hinterachse (16) und/oder im wesentlichen nahe der Hinterachse (16) angeordnet ist.

9. Stützvorrichtung nach einem der vorhergehenden Ansprüche, **dadurch gekennzeichnet, dass** die Kupplungseinrichtung (18) höhenverstellbar ist.

10. Stützvorrichtung nach einem der vorhergehenden Ansprüche, **dadurch gekennzeichnet, dass** sie mindestens eine insbesondere klappbare Auflagefläche (36) zur Anbringung eines Belastungsgewichts aufweist.
